# NEUE EUROPÄISCHE PATENTSCHRIFT

(11) **EP 2 998 051 B2**
(45) Veröffentlichungstag und Bekanntmachung des Hinweises auf die Entscheidung über den Einspruch: **26.06.2024**
(45) Hinweis auf die Patenterteilung: 18.03.2020
(21) Anmeldenummer: 15183532.9
(22) Anmeldetag: 02.09.2015
(51) Int. Cl.: B23B 5/38, B23B 1/00, B23Q 15/02, G05B 19/18

(54) **VERFAHREN ZUR HERSTELLUNG EINER SCHRÄGFLÄCHE MITTELS EINER DREHMASCHINE UND DREHMASCHINE**
METHOD FOR PRODUCING A TAPERED SURFACE BY MEANS OF A LATHE AND LATHE
PROCEDE DE FABRICATION D'UNE SURFACE EN FUSEAUA L'AIDE D'UN TOUR ET TOUR

(30) Priorität: 03.09.2014 DE 102014217613; 24.10.2014 DE 102014221725
(43) Veröffentlichungstag der Anmeldung: 23.03.2016
(73) Patentinhaber: GDW Werkzeugmaschinen GmbH, 91315 Höchstadt a. d. Aisch (DE)
(72) Erfinder: Ort, Hans, 91413 Neustadt a.d. Aisch (DE)
(74) Vertreter: Dr. Gassner & Partner mbB

(56) Entgegenhaltungen:
- EP-A1- 0 868 963
- EP-A2- 0 418 213
- DE-A1- 1 816 887
- DE-U1-202010 012 713
- JP-A- H02 198 701
- Mike Lynch: "The Pros and Cons of Constant Surface Speed", , 16. Dezember 2008 (2008-12-16), XP002753854, Gefunden im Internet: URL:http://www.mmsonline.com/columns/the-p ros-and-cons-of-constant-surface-speed [gefunden am 2016-02-03]

## Beschreibung

Die Erfindung betrifft ein Verfahren zur Herstellung einer Schrägfläche mittels einer Drehmaschine sowie eine Drehmaschine. Sie betrifft insbesondere ein Verfahren zum Herstellen einer Kegelfläche mittels einer Drehmaschine.

Die DE 25 20 480 A1 offenbart eine an einer Drehmaschine anbringbare Vorrichtung zum Drehen einer Kegelfläche. Die Vorrichtung umfasst eine Schablone mit einem einstellbaren Kegelwinkel. Der eingestellte Kegelwinkel wird von einem Fühler erfasst. Bei einer konstanten Vorschubgeschwindigkeit wird der Quer- bzw. Planschlitten durch die Vorrichtung so bewegt, dass das zu bearbeitende Werkstück mit einem dem eingestellten Kegelwinkel entsprechenden Winkel abgedreht wird.

Die DE 1 816 886 A offenbart das Aufzeichnen einer von einem zu reproduzierenden Objekt abgetasteten Kontur auf einem Aufzeichnungsträger. Bei Wiedergabe auf einer Werkzeugmaschine erfolgt die Bearbeitung des Werkstücks durch in x-, y- und z-Richtung entsprechend der Aufzeichnung gesteuerte Antriebsmotoren.

Aus der DE 20 2010 012 713 U1 ist eine Leit- und Zugspindeldrehmaschine bekannt, bei der eine Hauptspindel mit einer ersten Antriebseinrichtung antreibbar ist. Zum Antrieb einer Leit- oder Zugspindel ist eine von der ersten Antriebseinrichtung verschiedene zweite Antriebseinrichtung vorgesehen, welche unabhängig von der ersten Antriebseinrichtung mittels einer Steuereinrichtung steuerbar ist. Die Steuereinrichtung ist mit einer Positionsmess- und -anzeigeeinrichtung zur Erfassung und Anzeige von Positionswerten eines Haupt- oder Planschlittens verbunden. Ein Servomotor der zweiten Antriebseinrichtung ist mittels der Steuereinrichtung so steuerbar, dass eine Bewegung des Haupt- oder Planschlittens an einem vorgegebenen Endpunkt angehalten werden kann. Mit der bekannten Leit- und Zugspindeldrehmaschine ist es möglich, ein Werkzeug exakt bis zu einem vorgegebenen Endpunkt zu bewegen.

Die JP H02 198701 A offenbart ein Verfahren zur Herstellung einer Schrägfläche mittels einer Drehmaschine, bei der eine Steuereinrichtung vorgesehen ist, durch die während einer manuellen Bewegung eine automatische Axialbewegung mit einem bestimmten Winkel durchgeführt wird.

Die EP 0 868 963 A1 offenbart eine Drehmaschine nach dem Oberbegriff des Patentanspruchs 7.

Der Erfindung liegt die Aufgabe zu Grunde, ein möglichst einfach durchführbares Verfahren zur Herstellung einer Schrägfläche mittels einer einfach aufgebauten Drehmaschine anzugeben. Nach einem weiteren Ziel der Erfindung soll eine einfach aufgebaute Drehmaschine angegeben werden, mit der mit hoher Genauigkeit eine Schrägfläche herstellbar und reproduzierbar ist.

Diese Aufgabe wird durch die Merkmale der Patentansprüche 1 und 7 gelöst. Zweckmäßige Ausgestaltungen der Erfindung ergeben sich aus den Merkmalen der Patentansprüche 2 bis 6 und 8 bis 10 .

Nach Maßgabe der Erfindung wird ein Verfahren zur Herstellung einer Schrägfläche mittels einer Drehmaschine vorgeschlagen, welche umfasst:
eine mit einer ersten Antriebseinrichtung angetriebene Hauptspindel zum Rotieren eines Werkstücks,
eine mit einer zweiten Antriebseinrichtung angetriebene Zugspindel,
einen auf einem Maschinenbett mittels der Zugspindel in einer z-Richtung bewegbaren Hauptschlitten,
einen auf dem Hauptschlitten in einer senkrecht zur z-Richtung verlaufenden x-Richtung manuell bewegbaren Planschlitten,
eine Positionsmess- und -anzeigeeinrichtung zum Messen einer xz-Koordinate einer Schneidkante eines auf dem Planschlitten angebrachten Werkzeugs und zur Anzeige der xz-Koordinate auf einem Bildschirm, und
eine Steuereinrichtung zum Steuern der zweiten Antriebseinrichtung,
wobei das Verfahren die folgenden Schritte umfasst:
   Übergabe eines den Verlauf der Schrägfläche beschreibenden Datensatzes an die Steuereinrichtung,
   Bewegen der Schneidkante mittels des Haupt- und/oder des Planschlittens auf eine Position mit vorgegebenen Startkoordinaten,
   Rotieren des Werkstücks mittels der Hauptspindel, und
   manuelles Bewegen des Planschlittens in eine durch den Verlauf der Schrägfläche vorgegebene x-Richtung und gleichzeitiges automatisches Nachführen des Hauptschlittens in z-Richtung mittels der durch die Steuereinrichtung gesteuerten zweiten Antriebseinrichtung derart, dass die Schneidkante des Werkszeugs entsprechend dem Verlauf der herzustellenden Schrägfläche bewegt wird, wobei ständig die mit der Positionsmesseinrichtung gemessenen aktuellen xz-Koordinaten der Schneidkante des Werkzeugs erfasst werden, wobei unter Verwendung der aktuellen xz-Koordinaten sowie des den Verlauf der Schrägfläche beschreibenden Datensatzes mittels der Steuereinrichtung ständig z-Koordinaten zum automatischen Nachführen des Hauptschlittens in z-Richtung entsprechend der manuellen Bewegung des Planschlittens in x-Richtung mittels der Steuereinrichtung (S) berechnet werden.

Im Sinne der vorliegenden Erfindung wird unter einer "Schrägfläche" eine Fläche verstanden, welche schräg zur z-Richtung verläuft. Die "z-Richtung" entspricht der Richtung der Drehachse der Hauptspindel. Eine "Schrägfläche" im Sinne der Erfindung kann in der xz-Ebene eine gerade Linie, d. h. eine Kegelfläche, oder eine gekrümmte Linie oder auch eine Kombination aus solchen Linien sein.

Die "Positionsmess- und -anzeigeeinrichtung" umfasst eine Positionsmesseinrichtung, welche beispielsweise optische oder magnetische Signale auswertet. Derartige Positionsmesseinrichtungen sind nach dem Stand der Technik allgemein bekannt. Die gemessenen Positionswerte werden ständig an die Positionsanzeigeeinrichtung, welche z. B. einen Bildschirm umfasst, übergeben und dort angezeigt. Ferner werden die Positionswerte ständig an die Steuereinrichtung zum Steuern der zweiten Antriebseinrichtung übergeben. Unter Verwendung der Positionswerte sowie des Datensatzes werden mittels der Steuereinrichtung ständig Parameter zur Bewegung der zweiten Antriebseinrichtung berechnet und die zweite Antriebseinrichtung entsprechend diesen Parametern gesteuert.

Das erfindungsgemäße Verfahren ermöglicht auf einfache Weise eine halbautomatische Herstellung einer vorgegebenen Schrägfläche. Dabei können einfache Drehmaschinen zum Einsatz kommen, bei denen der Planschlitten in x-Richtung ausschließlich manuell bewegbar ist. Ferner kann eine solche Drehmaschine zur Bewegung des Hauptschlittens nur eine Zugspindel aufweisen. Das vorgeschlagene Verfahren eignet sich insbesondere zur Herstellung präziser Werkstücke in Kleinserien.

Nach einer vorteilhaften Ausgestaltung der Erfindung wird vor der Herstellung der Schrägfläche manuell eine an die Schrägfläche angenäherte Stufenfläche hergestellt. Die Herstellung einer solchen Stufenfläche ist insbesondere dann erforderlich, wenn die Schrägfläche bezüglich eines Durchmessers des Werkstücks radial relativ weit innen liegt.

Nach einer weiteren Ausgestaltung umfasst die Schrägfläche eine Kegelfläche. In diesem Fall umfasst der Datensatz bezüglich der Kegelfläche Anfangskoordinaten und Endkoordinaten oder einen Kegelwinkel. Sofern der Datensatz lediglich die Anfangs- und die Endkoordinaten umfasst, kann mittels der Steuereinrichtung ein Kegelwinkel berechnet werden. Die Eingabe von Endkoordinaten kann sich erübrigen, wenn die Schrägfläche beispielsweise bis zum äußeren Umfangsrand des Werkstücks reicht.

Nach einer alternativen Ausgestaltung ist die Schrägfläche ein Radius. In diesem Fall umfasst der Datensatz bezüglich des Radius Anfangskoordinaten und den Radius. Ferner kann der Datensatz auch Endkoordinaten umfassen.

Nach einer weiteren Ausgestaltung ist mit der Steuereinrichtung eine Drehzahl der mit der ersten Antriebseinrichtung angetriebenen Hauptspindel derart steuerbar, dass die Drehzahl mit zunehmendem Abstand der Schneidkante von einer Drehachse verringert wird. Zweckmäßigerweise wird die Drehzahl derart verringert, dass eine Schneidgeschwindigkeit im Wesentlichen konstant gehalten wird. Unter der "Schneidgeschwindigkeit" wird der zurückgelegte Umfangsweg des Werkstücks am Ort der Schneidkante pro Zeiteinheit verstanden. Indem die Schneidgeschwindigkeit im Wesentlichen konstant gehalten wird, kann eine gleichbleibende Oberflächenqualität erreicht werden.

Nach weiterer Maßgabe der Erfindung wird eine Drehmaschine vorgeschlagen, umfassend:
eine mit einer ersten Antriebseinrichtung angetriebene Hauptspindel zum Rotieren eines Werkstücks,
eine mit einer zweiten Antriebseinrichtung angetriebene Zugspindel,
einen auf einem Maschinenbett mittels der Zugspindel in einer z-Richtung bewegbaren Hauptschlitten,
einen auf dem Hauptschlitten in einer senkrecht zur z-Richtung verlaufenden x-Richtung manuell bewegbaren Planschlitten,
eine Positionsmess- und -anzeigeeinrichtung zum Messen einer xz-Koordinate einer Schneidkante eines auf dem Planschlitten angebrachten Werkzeugs und zur Anzeige der xz-Koordinate auf einem Bildschirm, und
eine Steuereinrichtung zum Steuern der zweiten Antriebseinrichtung,
wobei die Steuereinrichtung einen Eingabeabschnitt zur Eingabe eines den Verlauf der Schrägfläche beschreibenden Datensatzes und einen Steuerabschnitt umfasst, mit dem aus den mit der Positionsmess- und -anzeigeeinrichtung gemessenen aktuellen xz-Koordinaten und dem Datensatz z-Koordinaten zum automatischen Nachführen des Hauptschlittens in z-Richtung mittels der zweiten Antriebseinrichtung berechnet werden derart, dass die Schneidkante des Werkszeugs entsprechend dem Verlauf der herzustellenden Schrägfläche bewegt wird, wobei der Steuerabschnitt der Steuereinrichtung dazu konfiguriert ist, den Hauptschlitten auf Grund der manuellen Bewegung des Planschlittens in x-Richtung automatisch in z-Richtung nachzuführen..

Die vorgeschlagene Drehmaschine ist vorteilhafterweise einfach ausgestaltet. Deren Planschlitten ist zweckmäßigerweise ausschließlich manuell in x-Richtung bewegbar. Es kann auch nur eine Zugspindel zur Bewegung des Hauptschlittens in z-Richtung vorgesehen sein. Eine Leitspindel kann weggelassen sein. Die zweite Antriebseinrichtung zur Bewegung der Zugspindel ist vorteilhafterweise als Servo- bzw. Schrittmotor ausgeführt.

Mit der erfindungsgemäß vorgesehenen Steuereinrichtung werden ständig die mit der Positionsmesseinrichtung gemessenen aktuellen xz-Koordinaten einer Schneidkante des Werkzeugs erfasst. Unter Verwendung der aktuellen xz-Koordinaten sowie des den Verlauf der Schrägfläche beschreibenden Datensatzes werden mittels der Steuereinrichtung ständig z-Koordinaten zum Nachführen des Hauptschlittens entsprechend der manuellen Bewegung des Planschlittens in x-Richtung berechnet. Auf der Grundlage der berechneten z-Koordinaten wird die zweite Antriebseinrichtung derart gesteuert, dass die Schneidkante des Werkzeugs entsprechend dem Verlauf der herzustellenden Schrägfläche bewegt wird.

Nach einer weiteren Ausgestaltung steuert die Steuereinrichtung die Drehzahl der mit der ersten Antriebseinrichtung angetriebenen Hauptspindel derart, dass die Drehzahl mit zunehmendem Abstand der Schneidkante von der Drehachse der Hauptspindel verringert wird. Die Schneidgeschwindigkeit kann damit im Wesentlichen konstant gehalten werden.

Nach einer vorteilhaften Ausgestaltung der Erfindung weist der Eingabeabschnitt eine USB-, IR-, WLAN- oder Bluetooth-Schnittstelle zum Empfang des Datensatzes auf. Bei dem Eingabeabschnitt kann es sich auch um einen berührungsempfindlichen Bildschirm handeln, mit dem mittels eines darauf abgebildeten Ziffernfelds beispielsweise Anfangs- und Endkoordinaten an die Steuereinrichtung übergeben werden können.

Nachfolgend wird ein Ausführungsbeispiel der Erfindung anhand der Zeichnungen näher erläutert. Es zeigen:
- Fig. 1: eine schematische Darstellung einer Drehmaschine,
- Fig. 2: eine schematische Ansicht der Ausgangssituation des Verfahrens und
- Fig. 3: eine schematische Ansicht der Herstellung einer Kegelfläche.

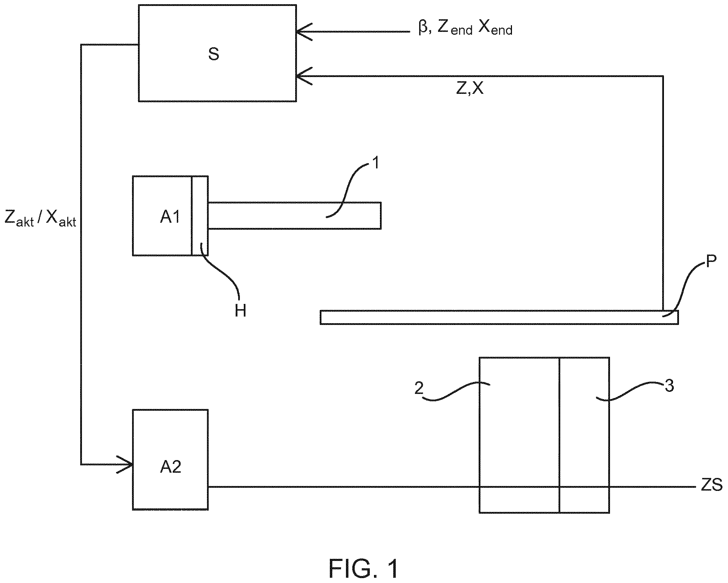

Fig. 1 zeigt eine schematische Darstellung einer zur Durchführung des erfindungsgemäßen Verfahrens geeigneten Drehmaschine. Eine erste Antriebseinrichtung A1 dient dem Antrieb einer Hauptspindel H. Ein Halbzeug bzw. ein teilweise fertiggestelltes Werkstück 1 ist in ein Spannfutter (hier nicht gezeigt) eingespannt, welches an der Hauptspindel H befestigt ist. Mit dem Bezugszeichen 2 ist ein parallel zur Achse der Hauptspindel H bewegbarer Hauptschlitten bezeichnet.

Eine zweite Antriebseinrichtung A2 dient dem wahlweisen Antrieb einer Zugspindel ZS. Die Zugspindel ZS kann wahlweise in den Hauptschlitten 2 eingekuppelt werden. Mit dem Bezugszeichen 3 ist ein senkrecht zur Achse der Hauptspindel H bewegbarer Planschlitten bezeichnet.

Die zweite Antriebseinrichtung A2 ist verschieden von der ersten Antriebseinrichtung A1. D. h. die zweite Antriebseinrichtung A2 kann unabhängig von der ersten Antriebseinrichtung A1 mittels einer Steuereinrichtung S gesteuert werden. Bei der Steuereinrichtung S handelt es sich zweckmäßigerweise um einen Computer bzw. eine Prozessrechnersteuerung.

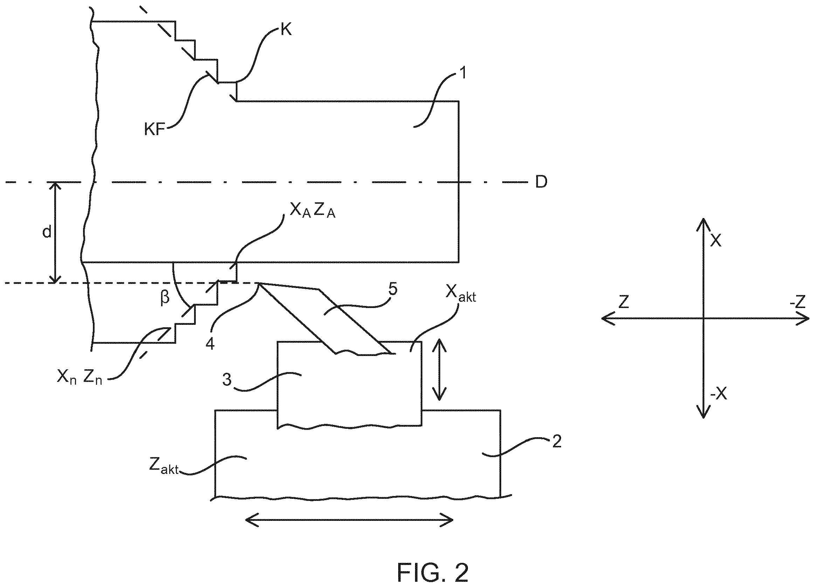

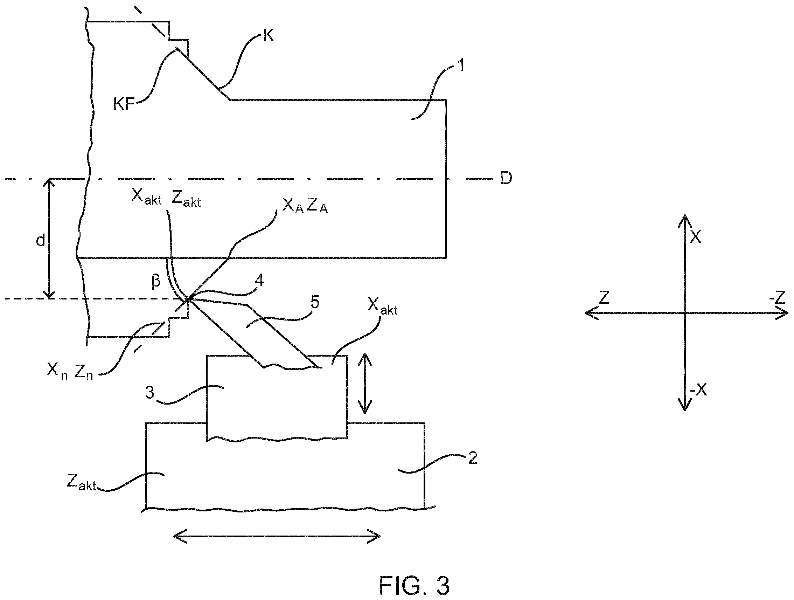

Zur Herstellung einer in den Fig. 2 und 3 mit dem Bezugszeichen KF bezeichneten glatten Kegelfläche können an die Steuereinrichtung S der Kegelwinkel β und die Anfangskoordinaten Z_{A} und X_{A} übergeben werden. Ferner können auch weitere Parameter, beispielsweise eine Vorschubgeschwindigkeit oder dgl., an die Steuereinrichtung S übergeben werden.

Mittels einer Positionsmesseinrichtung P werden laufend die aktuellen Koordinaten XₐₖₜZₐₖₜ des Haupt- 2 und des Planschlittens 3 gemessen. Die entsprechenden Messwerte werden an die Steuereinrichtung S übermittelt. Mit einem vorgegebenen Algorithmus werden von der Steuereinrichtung S die der zu glättenden Kegelfläche KF entsprechenden Koordinaten XₙZₙ berechnet.

Die Fig. 2 und 3 verdeutlichen in schematischen Ansichten nochmals das erfindungsgemäße Verfahren. In ein (hier nicht näher gezeigtes) Spannfutter der Hauptspindel H ist ein Werkstück 1 eingespannt. Das Werkstück 1 hat die mit einer durchgezogenen Linie angedeutete aktuelle Kontur K. Die Kontur K ist im Bereich einer herzustellenden glatten Kegelfläche KF stufenartig ausgebildet. Zur Glättung der Kontur K auf die gewünschte Kegelfläche KF wird an die Steuereinrichtung S zunächst der Kegelwinkel β sowie die Anfangskoordinaten X_{A}Z_{A} übergeben. Mittels der Steuereinrichtung S werden sodann die zum Schenkel des Kegelwinkels β korrespondierenden Koordinaten XₙZₙ berechnet. Anschließend kann beispielsweise der Hauptschlitten 2 in die Zugspindel ZS eingekuppelt werden. Dabei befindet sich die Werkzeugspitze 4 des Werkzeugs 5 vorteilhafterweise an den Anfangskoordinaten X_{A}Z_{A}. Anschließend wird der Planschlitten 3 durch die Bedienungsperson manuell in -X-Richtung bewegt. Die jeweiligen xz-Koordinaten der Werkzeugspitze 4 werden ständig mittels der Positionsmesseinrichtung P erfasst und an die Steuereinrichtung S weitergegeben. Mit der Steuereinrichtung S wird zu jeder aktuellen X-Koordinate Xₐₖₜ die korrespondierende aktuelle Z-Koordinate Zₐₖₜ berechnet. Die aktuelle X-Koordinate Xₐₖₜ und die dazu korrespondierende aktuelle Z-Koordinate Zₐₖₜ sind Elemente der von der Steuereinrichtung S berechneten Koordinaten XₙZₙ, welche die Kegelfläche KF beschreiben. Mittels der durch die Steuereinrichtung S gesteuerten zweiten Antriebseinrichtung A2 wird der Hauptschlitten 2 synchron zur manuellen Bewegung des Planschlittens 3 in Z-Richtung so bewegt, dass die Werkzeugspitze 4 immer exakt auf der herzustellenden Kegelfläche KF geführt wird. Damit kann schnell und einfach eine Kegelfläche KF hergestellt werden. Die Herstellung derartiger Kegelflächen KF ist reproduzierbar.

In einem weiteren Ausführungsbeispiel können die erste Antriebseinrichtung A1 und die zweite Antriebseinrichtung A2 unabhängig voneinander von der Steuereinrichtung S gesteuert werden. Zur Steuerung der ersten Antriebseinrichtung A1 erfasst die Steuereinrichtung S die Drehzahl der Hauptspindel H sowie die Position der Schneidkante bzw. der Werkzeugspitze 4.

Insbesondere berechnet die Steuereinrichtung S aus der Position Xₐₖₜ und Zₐₖₜ der Werkzeugspitze 4 einen Abstand d zur Drehachse D der Hauptspindel H. Hieraus ergibt sich der Umfang des Werkstücks 1 am Ort der Schneidkante. Aus dem Umfang und der Drehzahl ergibt sich die Schneidgeschwindigkeit. Die Steuereinrichtung S kann die Drehzahl so berechnen und steuern, dass die Schneidgeschwindigkeit im Wesentlichen konstant gehalten wird. Die Schneidgeschwindigkeit kann benutzerseitig an der Steuereinrichtung S eingestellt werden.

## Patentansprüche

1. Verfahren zur Herstellung einer Schrägfläche mittels einer Drehmaschine, umfassend:
eine mit einer ersten Antriebseinrichtung (A1) angetriebene Hauptspindel (H) zum Rotieren des Werkstücks (1),
eine mit einer zweiten Antriebseinrichtung (A2) angetriebene Zugspindel (ZS),
einen auf einem Maschinenbett mittels der Zugspindel (ZS) in einer z-Richtung bewegbaren Hauptschlitten (2),
einen auf dem Hauptschlitten (2) in einer senkrecht zur z-Richtung verlaufenden x-Richtung manuell bewegbaren Planschlitten (3),
eine Positionsmess- (P) und -anzeigeeinrichtung zum Messen einer xz-Koordinate einer Schneidkante eines auf dem Planschlitten (3) angebrachten Werkzeugs (5) und zur Anzeige der xz-Koordinate auf einem Bildschirm, und
eine Steuereinrichtung (S) zum Steuern der zweiten Antriebseinrichtung (A2),
wobei das Verfahren die folgenden Schritte umfasst:
Übergabe eines den Verlauf der Schrägfläche beschreibenden Datensatzes an die Steuereinrichtung (S),
Bewegen der Schneidkante mittels des Haupt- (2) und/oder des Planschlittens (3) auf eine Position mit vorgegebenen Startkoordinaten,
Rotieren des Werkstücks (1) mittels der Hauptspindel (H), und
Manuelles Bewegen des Planschlittens (3) in eine durch den Verlauf der Schrägfläche vorgegebene x-Richtung und gleichzeitiges automatisches Nachführen des Hauptschlittens (2) in z-Richtung mittels der durch die Steuereinrichtung (S) gesteuerten zweiten Antriebseinrichtung (A2) derart, dass die Schneidkante des Werkszeugs (5) entsprechend dem Verlauf der herzustellenden Schrägfläche bewegt wird, wobei ständig die mit der Postionsmesseinrichtung gemessenen aktuellen xz-Koordinaten der Schneidkante des Werkzeugs erfasst werden, wobei unter Verwendung der aktuellen xz-Koordinaten sowie des den Verlauf der Schrägfläche beschreibenden Datensatzes mittels der Steuereinrichtung ständig z-Koordinaten zum automatischen Nachführen des Hauptschlittens (2) in z-Richtung entsprechend der manuellen Bewegung des Planschlittens in x-Richtung mittels der Steuereinrichtung (S) berechnet werden.

2. Verfahren nach Anspruch 1, wobei vor der Herstellung der Schrägfläche manuell eine an die Schrägfläche angenäherte Stufenfläche hergestellt wird.

3. Verfahren nach Anspruch 1 oder 2, wobei die Schrägfläche eine Kegelfläche (KF) ist und der Datensatz bezüglich der Kegelfläche (KF) Anfangskoordinaten und Endkoordinaten oder einen Kegelwinkel (β) umfasst.

4. Verfahren nach Anspruch 1 oder 2, wobei die Schrägfläche ein Radius ist und der Datensatz bezüglich des Radius Anfangskoordinaten und den Radius umfasst.

5. Verfahren nach einem der vorhergehenden Ansprüche, wobei mit der Steuereinrichtung (S) eine Drehzahl der mit der ersten Antriebseinrichtung (A1) angetriebenen Hauptspindel (H) derart gesteuert wird, dass die Drehzahl mit zunehmendem Abstand (d) der Schneidkante von der Drehachse (D) der Hauptspindel (H) verringert wird.

6. Verfahren nach Anspruch 5, wobei die Drehzahl derart verringert wird, dass eine Schneidgeschwindigkeit im Wesentlichen konstant gehalten wird.

7. Drehmaschine, umfassend:
eine mit einer ersten Antriebseinrichtung (A1) angetriebene Hauptspindel (H) zum Rotieren eines Werkstücks (1),
eine mit einer zweiten Antriebseinrichtung (A2) angetriebene Zugspindel (ZS),
einen auf einem Maschinenbett mittels der Zugspindel (ZS) in einer z-Richtung bewegbaren Hauptschlitten (2),
einen auf dem Hauptschlitten (2) in einer senkrecht zur z-Richtung verlaufenden x-Richtung manuell bewegbaren Planschlitten (3),
eine Positionsmess- (P) und -anzeigeeinrichtung zum Messen einer xz-Koordinate einer Schneidkante eines auf dem Planschlitten (3) angebrachten Werkzeugs (5) und zur Anzeige der xz-Koordinate auf einem Bildschirm, und
eine Steuereinrichtung (S) zum Steuern der zweiten Antriebseinrichtung (A2),
wobei die Steuereinrichtung (S) einen Eingabeabschnitt zur Eingabe eines den Verlauf der Schrägfläche beschreibenden Datensatzes und einen Steuerabschnitt umfasst, mit dem aus den mit der Positionsmess- (P) und -anzeigeeinrichtung gemessenen aktuellen xz-Koordinaten und dem Datensatz z-Koordinaten zum automatischen Nachführen des Hauptschlittens (2) in z-Richtung mittels der zweiten Antriebseinrichtung (A2) berechnet werden derart, dass die Schneidkante des Werkszeugs (5) entsprechend dem Verlauf der herzustellenden Schrägfläche bewegt wird,
**dadurch gekennzeichnet, dass**
der Steuerabschnitt der Steuereinrichtung (S) dazu konfiguriert ist, den Hauptschlitten (2) auf Grund der manuellen Bewegung des Planschlittens (3) in x-Richtung automatisch in z-Richtung nachzuführen.

8. Drehmaschine nach Anspruch 7, wobei die Steuereinrichtung (S) eine Drehzahl der mit der ersten Antriebseinrichtung (A1) angetriebenen Hauptspindel (H) derart steuert, dass die Drehzahl mit zunehmendem Abstand (d) der Schneidkante von der Drehachse (D) der Hauptspindel (H) verringert wird.

9. Drehmaschine nach Anspruch 8, wobei die Steuereinrichtung (S) aus den Daten der Positionsmessung den Abstand (d) der Schneidkante zur Drehachse (D) der Hauptspindel (H) und die Drehzahl der Hauptspindel (H) so berechnet, dass die Schneidgeschwindigkeit im Wesentlichen konstant gehalten wird.

10. Drehmaschine nach Anspruch 7, wobei der Eingabeabschnitt eine USB-, IR-, WLAN- oder Bluetooth-Schnittstelle zum Empfang des Datensatzes aufweist.

## Claims

1. A method of producing a tapered surface by a lathe, comprising:
a main spindle (H) driven by a first drive device (A1) for rotating the workpiece (1),
a feed spindle (ZS) driven by a second drive device (A2),
a main slide (2) movable in a z direction on a machine bed by the feed spindle (ZS),
a cross slide (3) manually movable on the main slide (2) in an x direction perpendicular to the z direction,
a position measuring (P) and display device for measuring an xz coordinate of a cutting edge of a tool (5) mounted on the cross slide (3) and displaying the xz coordinate on a screen, and
a control device (S) for controlling the second drive device (A2),
the method comprising the following steps:
transferring a data set describing the course of the tapered surface to the control device (S),
moving the cutting edge by device of the main slide (2) and/or the cross slide (3) to a position with predetermined starting coordinates,
rotating the workpiece (1) by the main spindle (H), and
manually moving the cross slide (3) in an x direction predetermined by the course of the tapered surface and, simultaneously, automatically tracking the main slide (2) in the z direction by the second drive device (A2) controlled by the control device (S) such that the cutting edge of the tool (5) is moved according to the course of the tapered surface to be produced, wherein the current xz-coordinates of the cutting edge of the tool measured by the position measuring device are continuously recorded, wherein using the current xz-coordinates and the data set describing the course of the inclined surface by means of the control device z coordinates for automatically tracking the main slide (2) in the z direction will be continuously calculated corresponding to the manual movement of the cross slide in the x-direction.

2. The method according to claim 1, wherein a stepped surface approximated to the tapered surface is manually produced prior to producing the tapered surface.

3. The method according to claim 1 or 2, wherein the tapered surface is a conical surface (KF) and the data set with respect to the conical surface (KF) comprises start coordinates and end coordinates or a cone angle (β).

4. The method according to claim 1 or 2, wherein the tapered surface is a radius and the data set with respect to the radius comprises start coordinates and the radius.

5. The method according to one of the preceding claims, wherein a rotational speed of the main spindle (H) driven by the first drive device (A1) is controlled using the control device (S) such that the rotational speed is reduced while increasing the distance (d) of the cutting edge from the rotational axis (D) of the main spindle (H).

6. The method according to claim 5, wherein the rotational speed is reduced such that a cutting speed is kept substantially constant.

7. A lathe comprising:
a main spindle (H) driven by a first drive device (A1) for rotating a workpiece (1),
a feed spindle (ZS) driven by a second drive device (A2),
a main slide (2) movable in a z direction on a machine bed by the feed spindle (ZS),
a cross slide (3) manually movable on the main slide (2) in an x direction perpendicular to the z direction,
a position measuring (P) and display device for measuring an xz coordinate of a cutting edge of a tool (5) mounted on the cross slide (3) and displaying the xz coordinate on a screen, and
a control device (S) for controlling the second drive device (A2),
wherein
the control device (S) comprises an input section for inputting a data set describing the course of the tapered surface and a control section which control section and the data set is used to calculate z coordinates for automatically tracking the main slide (2) in the z direction by the second drive device (A2) from the current xz coordinates measured with the position measuring (P) and display device, such that the cutting edge of the tool (5) is moved according to the course of the tapered surface to be produced, **characterised in that**
the control section of the control device (S) is configured to automatically track the main slide (2) in the z direction due to the manual movement of the cross slide (3) in the x-direction.

8. The lathe according to claim 7, wherein the control device (S) controls a rotational speed of the main spindle (H) driven by the first drive device (A1) such that the rotational speed is reduced while increasing the distance (d) of the cutting edge from the rotational axis (D) of the main spindle (H).

9. The lathe according to claim 8, wherein the control device (S) calculates the distance (d) of the cutting edge from the rotational axis (D) of the main spindle (H) and the rotational speed of the main spindle (H) using the data of the position measurement such that the cutting speed is kept substantially constant.

10. The lathe according to claim 7, wherein the input section comprises a USB, IR, WLAN or Bluetooth interface for receiving the data set.

## Revendications

1. Procédé de fabrication d'une surface oblique au moyen d'un tour, comprenant:
une broche principale (H) entraînée par un premier dispositif d'entraînement (A1) pour la rotation de la pièce à usiner (1),
une barre de chariotage (ZS) entraînée par un second dispositif d'entraînement (A2),
un chariot principal (2) pouvant être déplacé sur un banc de machine au moyen de la barre de chariotage (ZS) dans un sens z,
un chariot transversal (3) pouvant être déplacé manuellement sur le chariot principal (2) dans un sens x s'étendant perpendiculairement au sens z,
un dispositif de mesure de position (P) et d'affichage de position pour mesurer une coordonnée xz d'une arête de coupe d'un outil (5) monté sur le chariot transversal (3) et pour afficher la coordonnée xz sur un écran, et
un dispositif de commande (S) pour commander le second dispositif d'entraînement (A2),
en ce que le procédé comprend les étapes suivantes consistant :
au transfert d'un enregistrement de données décrivant le tracé de la surface oblique au dispositif de commande (S),
au déplacement de l'arête de coupe au moyen du chariot principal (2) et/ou du chariot transversal (3) à une position avec des coordonnées de démarrage prédéfinies,
à la rotation de la pièce à usiner (1) au moyen de la broche principale (H), et
au déplacement manuel du chariot transversal (3) dans un sens x prédéfini par le tracé de la surface oblique et à l'asservissement automatique simultané du chariot principal (2) dans le sens z au moyen du second dispositif d'entraînement (A2) commandé par le dispositif de commande (S) de sorte que l'arête de coupe de l'outil (5) soit déplacée conformément au tracé de la surface oblique à réaliser, en ce que les coordonnées xz actuelles de l'arête de coupe de l'outil mesurées par le dispositif de mesure de position sont saisies en permanence, en ce que des coordonnées z pour l'asservissement automatique du chariot principal (2) dans le sens z sont calculées en permanence au moyen du dispositif de commande à l'appui des coordonnées xz actuelles ainsi que de l'enregistrement de données décrivant le tracé de la surface oblique, conformément au déplacement manuel du chariot transversal dans le sens x au moyen du dispositif de commande (S).

2. Procédé selon la revendication 1, en ce qu'une surface étagée approximative de la surface oblique est réalisée manuellement avant la fabrication de la surface oblique.

3. Procédé selon la revendication 1 ou 2, en ce que la surface oblique est une surface conique (KF) et que l'enregistrement de données par rapport à la surface conique (KF) comprend des coordonnées initiales et des coordonnées finales ou un angle de cône (β).

4. Procédé selon la revendication 1 ou 2, en ce que la surface oblique est un rayon et l'enregistrement de données par rapport au rayon comprend des coordonnées initiales et le rayon.

5. Procédé selon l'une des revendications précédentes, en ce qu'avec le dispositif de commande (S) une vitesse de rotation de la broche principale (H) entraînée par le premier dispositif d'entraînement (A1) est commandée de telle façon que la vitesse de rotation à distance (d) croissante de l'arête de coupe par rapport à l'axe de rotation (D) de la broche principale (H) diminue.

6. Procédé selon la revendication 5, en ce que la vitesse de rotation est réduite de telle façon qu'une vitesse de coupe est maintenue sensiblement constante.

7. Tour comprenant :
une broche principale (H) entraînée par un premier dispositif d'entraînement (A1) pour la rotation d'une pièce à usiner (1),
une barre de chariotage (ZS) entraînée par un second dispositif d'entraînement (A2),
un chariot principal (2) qui peut être déplacé dans un sens z sur un banc de machine au moyen de la barre de chariotage (ZS),
un chariot transversal (3) qui peut être déplacé manuellement sur le chariot principal (2) dans un sens x s'étendant perpendiculairement au sens z,
un dispositif de mesure de position (P) et d'affichage de position pour mesurer une coordonnée xz d'une arête de coupe d'un outil (5) monté sur le chariot transversal (3) et pour afficher la coordonnée xz sur un écran, et
un dispositif de commande (S) pour commander le second dispositif d'entraînement (A2),
en ce que le dispositif de commande (S) comporte une section de saisie pour la saisie d'un enregistrement de données décrivant le tracé de la surface oblique et une section de commande qui permet de calculer à partir des coordonnées xz actuelles mesurées avec le dispositif de mesure de position (P) et d'affichage de position et des coordonnées z de l'enregistrement de données pour l'asservissement automatique du chariot principal (2) dans le sens z au moyen du second dispositif d'entraînement (A2) de telle façon que l'arête de coupe de l'outil (5) est déplacée conformément au tracé de la surface oblique à réaliser,
**caractérisé en ce que**
la section de commande du dispositif de commande (S) est configurée pour l'asservissement automatique dans le sens z du chariot principal (2) en raison du déplacement manuel du chariot transversal (3) dans le sens x.

8. Tour selon la revendication 7, en ce que le dispositif de commande (S) commande une vitesse de rotation de la broche principale (H) entraînée par le premier dispositif d'entraînement (A1) de telle façon que la vitesse de rotation à distance (d) croissante de l'arête de coupe par rapport à l'axe de rotation (D) de la broche principale (H) diminue.

9. Tour selon la revendication 8, en ce que le dispositif de commande (S) calcule à partir des données de la mesure de position la distance (d) de l'arête de coupe par rapport à l'axe de rotation (D) de la broche principale (H) et la vitesse de rotation de la broche principale (H) de façon à ce que la vitesse de coupe soit maintenue sensiblement constante.

10. Tour selon la revendication 7, en ce que la section de saisie comporte une interface USB, IR, WLAN ou Bluetooth pour la réception de l'enregistrement de données.
